(19) Europäisches Patentamt / European Patent Office / Office européen des brevets

(11) **EP 3 454 306 B1**

(12) **FASCICULE DE BREVET EUROPEEN**

(45) Date de publication et mention de la délivrance du brevet:
**18.11.2020 Bulletin 2020/47**

(51) Int Cl.:
**G07C 9/00** *(2020.01)*     **H04W 12/12** *(2009.01)*
**G06K 9/00** *(2006.01)*     *G01G 19/50 (2006.01)*

(21) Numéro de dépôt: **18306085.4**

(22) Date de dépôt: **07.08.2018**

(54) **DÉTECTION DE FRAUDE POUR CONTRÔLE D'ACCÈS PAR RECONNAISSANCE FACIALE**

ENTDECKUNG VON BETRUG FÜR DIE ZUGANGSKONTROLLE DURCH GESICHTSERKENNUNG

FRAUD DETECTION FOR CONTROLLING ACCESS BY FACIAL RECOGNITION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **08.08.2017 FR 1757585**

(43) Date de publication de la demande:
**13.03.2019 Bulletin 2019/11**

(73) Titulaire: **Idemia Identity & Security France**
**92400 Courbevoie (FR)**

(72) Inventeurs:
- **BEAUDET, Jean**
  **92130 ISSY LES MOULINEAUX (FR)**
- **RIEUL, François**
  **92130 ISSY LES MOULINEAUX (FR)**
- **FOURRE, Joël-Yann**
  **92130 ISSY LES MOULINEAUX (FR)**
- **CHASTEL, Pierre**
  **92130 ISSY LES MOULINEAUX (FR)**

(74) Mandataire: **Regimbeau**
**20, rue de Chazelles**
**75847 Paris Cedex 17 (FR)**

(56) Documents cités:
CN-A- 101 246 608     JP-A- 2017 041 218
US-A1- 2016 063 314     US-A1- 2016 091 359
US-A1- 2016 109 281

- LINGYUN WEN ET AL: "A computational approach to body mass index prediction from face images", IMAGE AND VISION COMPUTING, vol. 31, no. 5, 2 avril 2013 (2013-04-02), pages 392-400, XP055476402, GUILDFORD, GB ISSN: 0262-8856, DOI: 10.1016/j.imavis.2013.03.001

**EP 3 454 306 B1**

**Description**

## DOMAINE TECHNIQUE GÉNÉRAL ET ART ANTÉRIEUR

La présente invention concerne le contrôle d'accès par reconnaissance faciale.

Plus particulièrement, l'invention propose un procédé et un système de détection de fraude pour les systèmes de contrôle d'accès de ce type.

La reconnaissance faciale est classiquement connue et couramment utilisée par des systèmes de contrôle d'accès, notamment pour le contrôle aux frontières (aéroports ou autres).

Elle consiste à acquérir au moins une image d'un individu se présentant au système de contrôle (sas ou couloir de contrôle muni d'une ou plusieurs caméras, par exemple), à l'analyser pour en déduire un certain nombre de caractéristiques du visage (par exemple, écartement des yeux, des arêtes du nez, des commissures des lèvres, des oreilles, du menton, etc.) et à comparer ces caractéristiques à des jeux de caractéristiques stockés dans une base de données existante afin d'identifier une personne ou de vérifier son identité.

L'une des fraudes possibles avec ce type de système consiste pour un individu à essayer de passer juste derrière une autre personne en se faufilant de façon à être occulté par rapport aux caméras.

Plusieurs techniques ont déjà été envisagées pour permettre de détecter ce type de fraude.

Une première solution consiste à détecter sur les images l'existence de plusieurs visages.

Une autre technique possible consiste à utiliser une caméra en temps de vol (« time of fly » selon la terminologie anglo-saxonne) que l'on positionne en surplomb par rapport à la zone où les personnes se présentent et circulent.

Une autre solution encore consiste à utiliser un tapis d'unicité, c'est-à-dire un tapis permettant l'acquisition de mesures de pression liées à la marche d'une personne sur celui-ci et à mettre sur ces mesures un traitement destiné à détecter le fait que deux personnes avancent sur le tapis.

Un exemple en ce sens est par exemple décrit dans la demande de brevet français FR2871602.

Cette solution s'avère toutefois insuffisante pour véritablement permettre d'éviter toute fraude.

Un autre exemple est décrit dans la demande CN101246608 qui propose de comparer un poids mesuré avec un poids préalablement enregistré afin de détecter une éventuelle fraude lors du passage au niveau de la zone de contrôle.

Toutes ces solutions sont complémentaires et aucune ne se suffit à elle-même.

Il persiste donc toujours un besoin pour de nouvelles solutions de détection de fraude, simples, peu onéreuses, fiables et potentiellement complémentaires aux solutions existantes.

## PRÉSENTATION GÉNÉRALE DE L'INVENTION

Un but général de l'invention est de proposer une solution de détection de fraude pour système de contrôle d'accès par reconnaissance faciale qui soit efficace, simple à mettre en œuvre et peu onéreuse.

A cet effet, l'invention propose un procédé de détection de fraude pour contrôle d'accès par reconnaissance facialeselon la revendication 1.

Ce procédé est avantageusement complété par les différentes caractéristiques suivantes prises seules ou en combinaison :

- l'estimation du poids de l'individu met en œuvre une estimation de l'indice de masse corporelle de la personne par traitement d'une image du visage par l'unité de calcul ;
- l'estimation du poids de l'individu met en œuvre une estimation de la hauteur de celui-ci par traitement d'au moins une image du visage par l'unité de calcul ;
- l'estimation de la hauteur de l'individu met en œuvre une détermination de la hauteur des yeux de celui-ci ;
- lors de la comparaison par l'unité de calcul entre le poids estimé et le poids mesuré, ladite unité de calcul vérifie si le poids mesuré est plus élevé que le poids estimé, à une marge d'erreur donnée, et déclenche un signal de détection de fraude lorsque c'est le cas ;
- la marge d'erreur donnée est de l'ordre de 20 kg ;
- la marge d'erreur donnée est comprise entre 7 et 15 kg ;
- on détermine sur l'au moins une image acquise du visage de l'individu se présentant au niveau de ladite zone des caractéristiques biométriques du visage,
- on compare ces caractéristiques biométriques du visage de l'individu à des caractéristiques biométriques stockées dans un document de référence ou dans une base de données,
- on autorise ou non l'accès en fonction du résultat de cette comparaison

L'invention propose par ailleurs un système de détection de fraude.

## PRÉSENTATION DES FIGURES

D'autres caractéristiques et avantages de l'invention ressortiront encore de la description qui suit, laquelle est purement illustrative et non limitative, et doit être lue en regard des figures annexées sur lesquelles :

- la figure 1 est une représentation schématique d'un système de contrôle d'accès conforme à un mode de réalisation possible de l'invention ;
- la figure 2 illustre différentes étapes d'un traitement de contrôle d'accès et de détection de fraude conforme à un mode de mise en œuvre possible de l'invention.

## DESCRIPTION D'UN OU PLUSIEURS MODES DE MISE EN ŒUVRE ET DE RÉALISATION

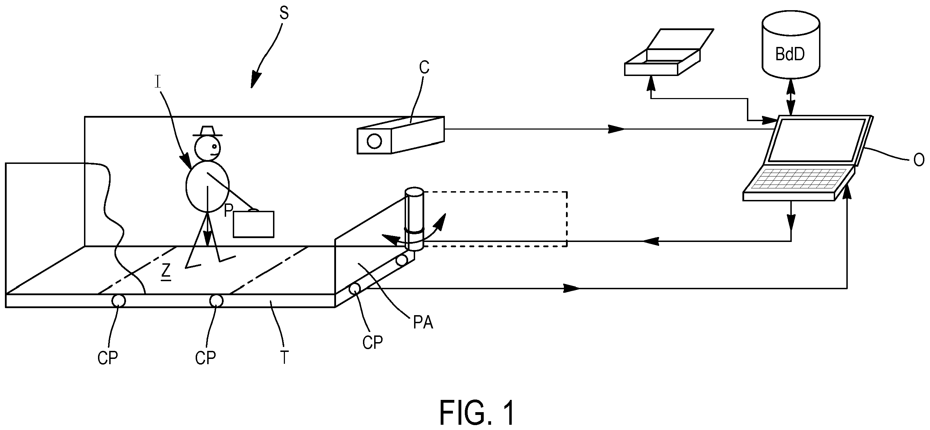

On a représenté sur la figure 1 un système de contrôle d'accès S par reconnaissance faciale.

Ce système comporte une ou plusieurs caméra(s) C disposée(s) dans un sas de contrôle d'accès à une hauteur et avec une orientation permettant l'acquisition d'une image du visage d'un individu I se déplaçant dans un couloir menant à une porte d'accès PA.

La ou les caméra(s) C sont connectées à une unité de traitement U (ordinateur, serveur de calcul, etc.) à laquelle les images sont envoyées.

Cette unité de traitement U est apte à traiter la ou les image(s) reçue(s) pour en déduire des caractéristiques de biométrie faciale.

Elle est en outre apte à échanger avec un lecteur L de documents portant des informations biométriques (lecteur de puce de passeport biométrique par exemple) ou encore avec une base de données BdD dans laquelle sont stockées les caractéristiques biométriques des individus auxquels on souhaite permettre de donner l'accès à une zone réservée au-delà de la porte PA (ou encore des individus que l'on souhaite détecter lorsqu'il se présente à la porte PA par exemple).

L'unité que constitue l'ordinateur U commande l'ouverture ou le blocage de la porte PA en fonction des résultats des comparaisons menées sur les caractéristiques des images.

Cette ouverture est en outre fonction du résultat d'une comparaison entre un poids estimé pour l'individu I se déplaçant dans le couloir du sas et son poids mesuré alors qu'il passe dans le sas.

A cet effet, le couloir peut présenter un tapis de mesure de poids qui permet de mesurer le poids de l'individu se déplaçant sur celui-ci.

Notamment, il peut être prévu dans le couloir d'accès une zone Z spécifique au niveau de laquelle on demande à l'individu I de s'arrêter pour permettre la mesure de poids et l'acquisition des images de son visage.

Cette zone Z est par exemple matérialisée au sol par de simples traits ou est de préférence une zone fermée de type sas.

Le tapis sur lequel l'individu I se déplace est équipé de capteurs de poids CP, notamment au niveau de cette zone Z d'arrêt.

Les mesures de poids ainsi obtenues sont transmises à l'unité de traitement U pour mise en œuvre d'une comparaison entre le poids ainsi mesuré et le poids estimé déterminé à partir des caractéristiques de l'image du visage de l'individu I.

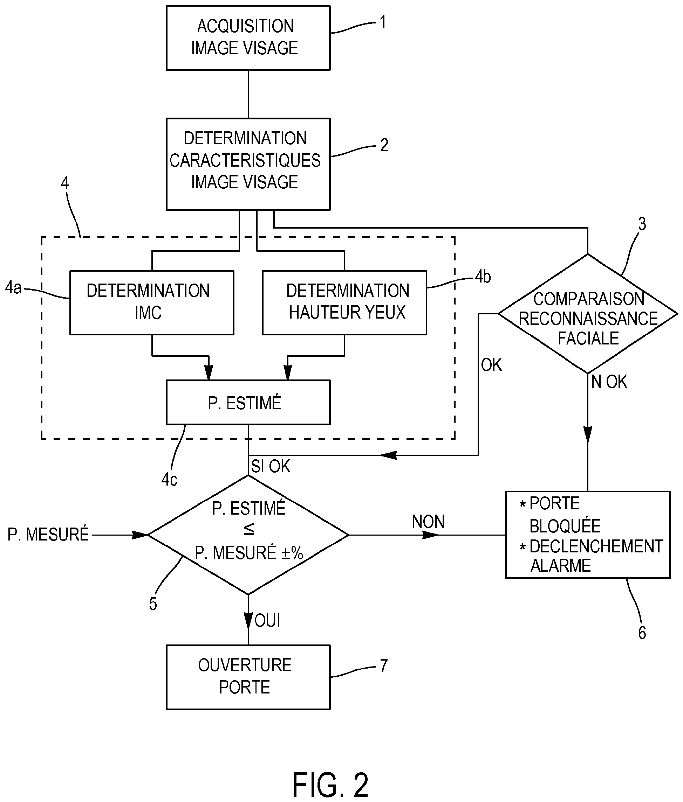

Plus particulièrement, le traitement d'une image de visage et le contrôle d'accès peuvent se faire ainsi qu'illustré sur la figure 2.

Après acquisition de l'image (étape 1), l'unité de traitement détermine les caractéristiques biométriques du visage (écartement des yeux, des arêtes du nez, des commissures des lèvres, des oreilles, du menton, etc.) (étape 2).

Ces caractéristiques biométriques de l'individu sont ensuite utilisées d'une part pour mettre en œuvre la reconnaissance faciale (étape 3) et d'autre part pour déterminer le poids estimé (étape 4).

La reconnaissance faciale 3 se fait en interrogeant la base de données BdD ou en comparant les caractéristiques de l'image acquise à des caractéristiques fournies par un document officiel tel qu'un passeport biométrique à puce.

Selon le résultat de la comparaison, l'unité U peut être amenée à déclencher une alarme en maintenant la porte d'accès PA bloquée (étape 6 - cas résultat NOK) ou au contraire à considérer que l'une des conditions pour l'ouverture de la porte est satisfaite (cas OK).

L'estimation du poids (étape 4) s'effectue en traitant les caractéristiques biométriques de l'image pour estimer l'indice de masse corporelle de la personne (étape 4a), ainsi qu'en déterminant la hauteur des yeux de l'individu (étape 4b).

L'estimation de l'IMC se fait par exemple de la façon proposée dans l'article Wen, L., & Guo, G. (2013), A Computational Approach To Body Mass Index Prediction From Face Images, Image and Vision Computing, 31(5), 392-400.

Des traitements à base d'algorithmes d'intelligence artificielle (machine learning) sont également possibles.

En parallèle à cette étape 4a, le traitement met en œuvre une détermination de la hauteur des yeux de l'individu I (étape 4b). Cette détermination est fonction de l'orientation de la caméra et se fait par exemple en déterminant la position des yeux sur l'image acquise lorsque l'individu marque un temps d'arrêt au niveau de la zone Z.

Elle peut également se faire par analyse de plusieurs images successives acquises alors que l'individu I se déplace dans le couloir qui mène à la porte d'accès PA.

La hauteur des yeux ainsi déterminée permet une approximation de la hauteur de la personne.

La double estimation de l'indice de masse corporelle d'une part et de la hauteur des yeux de l'individu d'autre part permet ainsi une estimation de la masse de la personne (étape 4c) :

$$\text{poids estimé} = \text{IMC} \times (\text{hauteur de l'individu})^2$$

Le poids « P estimé » est ensuite comparé au poids « P mesuré » (étape 5) avec une marge d'erreur donnée.

Lorsque le poids mesuré est nettement plus élevé que le poids estimé, la porte d'accès PA est bloquée et une alarme est déclenchée (étape 6).

Par contre, lorsque le poids estimé et le poids mesuré correspondent sensiblement, l'ouverture de la porte est commandée (étape 7).

L'ordre de grandeur de l'erreur entre le poids estimé et le poids mesuré est par exemple d'une dizaine de kilos (par exemple de l'ordre de 20 kg, ou entre 7 et 15 kg). Cet ordre de grandeur tient compte de la marge d'erreur sur l'estimation du poids ainsi que des éventuels bagages à main que l'individu peut avoir avec lui au moment où il franchit le contrôle.

Ainsi, le traitement proposé permet une détection de fraude en détectant non pas le fraudeur lui-même mais une incohérence entre la personne qui se montre à la caméra et le poids mesuré.

**Revendications**

1. Procédé de détection de fraude pour contrôle d'accès par reconnaissance faciale, dans lequel on met en œuvre au niveau d'une zone où le contrôle d'accès est vérifié pour un individu se présentant au niveau de ladite zone :

   - une mesure du poids de l'individu, au moins un capteur de poids étant prévu au sol à cet effet ;
   - une acquisition d'au moins une image du visage de l'individu se présentant au niveau de ladite zone, par au moins une caméra prévue à cet effet ;
   - une estimation du poids de l'individu par traitement par une unité de calcul de l'au moins une image acquise du visage de l'individu se présentant au contrôle d'accès ;
   - une comparaison par ladite unité de calcul entre le poids estimé et le poids mesuré ;
   et dans lequel ladite unité de calcul déclenche ou non l'émission d'un signal de détection de fraude en fonction du résultat de cette comparaison.

2. Procédé selon la revendication 1, dans lequel l'estimation du poids de l'individu met en œuvre une estimation de l'indice de masse corporelle de la personne par traitement d'une image du visage par l'unité de calcul.

3. Procédé selon la revendication 2, dans lequel l'estimation du poids de l'individu met en œuvre une estimation de la hauteur de celui-ci par traitement d'au moins une image du visage par l'unité de calcul.

4. Procédé selon la revendication 3, dans lequel l'estimation de la hauteur de l'individu met en œuvre une détermination de la hauteur des yeux de celui-ci.

5. Procédé selon l'une des revendications précédentes, dans lequel, lors de la comparaison par l'unité de calcul entre le poids estimé et le poids mesuré, ladite unité de calcul vérifie si le poids mesuré est plus élevé que le poids estimé, à une marge d'erreur donnée, et déclenche un signal de détection de fraude lorsque c'est le cas.

6. Procédé selon la revendication 5, dans lequel la marge d'erreur donnée est de l'ordre de 20 kg.

7. Procédé selon la revendication 5, dans lequel la marge d'erreur donnée est comprise entre 7 et 15 kg.

8. Procédé selon l'une des revendications précédentes, dans lequel :

   - on détermine sur l'au moins une image acquise du visage de l'individu se présentant au niveau de ladite zone des caractéristiques biométriques du visage,

- on compare ces caractéristiques biométriques du visage de l'individu à des caractéristiques biométriques stockées dans un document de référence ou dans une base de données,
- on autorise ou non l'accès en fonction du résultat de cette comparaison.

9. Système de détection de fraude pour contrôle d'accès par reconnaissance faciale, comportant, dans une zone où le contrôle d'accès est vérifié pour un individu se présentant au niveau de ladite zone :

- au moins un capteur de poids au sol pour la mesure du poids de l'individu se présentant dans ladite zone ;
- au moins une caméra pour l'acquisition d'au moins une image du visage de l'individu se présentant au niveau de ladite zone ;
- une unité de calcul adaptée pour la mise en œuvre d'une estimation du poids de l'individu sur l'au moins une image acquise du visage d'un individu se présentant au contrôle d'accès ;
- ladite unité de calcul étant en outre adaptée pour la mise en œuvre d'une comparaison entre le poids estimé et le poids mesuré et pour le déclenchement ou non de l'émission d'un signal de détection de fraude en fonction du résultat de cette comparaison.

10. Système selon la revendication précédente comportant :

- une unité de traitement adaptée à la détermination sur l'au moins une image acquise du visage de l'individu se présentant au niveau de ladite zone des caractéristiques biométriques du visage de l'individu, ladite unité de calcul étant en outre adaptée à la comparaison de ces caractéristiques biométriques du visage de l'individu à des caractéristiques biométriques stockées dans un document de référence ou dans une base de données et autorisant ou non l'accès à la zone réservée en fonction du résultat de cette comparaison.

**Patentansprüche**

1. Verfahren zur Entdeckung von Betrug für die Zugangskontrolle durch Gesichtserkennung, wobei im Bereich einer Zone, wo die Zugangskontrolle für ein Individuum durchgeführt wird, das sich im Bereich der Zone präsentiert, erfolgt:

- eine Messung des Gewichts des Individuums, wobei zu diesem Zweck mindestens ein Gewichtssensor auf dem Boden vorgesehen ist;
- eine Erfassung von mindestens einem Bild des Gesichts des Individuums, das sich im Bereich der Zone präsentiert, durch mindestens eine Kamera, die zu diesem Zweck vorgesehen ist;
- eine Schätzung des Gewichts des Individuums durch Verarbeitung durch eine Recheneinheit des mindestens einen Bildes, das von dem Gesicht des Individuums erfasst wurde, das sich an der Zugangskontrolle präsentiert;
- ein Vergleich, durch die Recheneinheit, zwischen dem geschätzten Gewicht und dem gemessenen Gewicht; und wobei die Recheneinheit das Senden eines Betrugsdetektionssignals in Abhängigkeit von dem Ergebnis dieses Vergleichs auslöst oder nicht.

2. Verfahren nach Anspruch 1, wobei bei der Schätzung des Gewichts des Individuums eine Schätzung des Körpermasseindexes der Person durch Verarbeitung eines Bildes des Gesichts durch die Recheneinheit durchgeführt wird.

3. Verfahren nach Anspruch 2, wobei bei der Schätzung des Gewichts des Individuums eine Schätzung der Größe desselben durch Verarbeitung von mindestens einem Bild des Gesichts durch die Recheneinheit durchgeführt wird.

4. Verfahren nach Anspruch 3, wobei bei der Schätzung der Größe des Individuums eine Bestimmung der Höhe der Augen desselben durchgeführt wird.

5. Verfahren nach einem der vorangehenden Ansprüche, wobei die Recheneinheit bei dem Vergleich durch die Recheneinheit zwischen dem geschätzten Gewicht und dem gemessenen Gewicht überprüft, ob das gemessene Gewicht um eine bestimmte Fehlermarge höher ist als das geschätzte Gewicht und ein Betrugsdetektionssignal auslöst, wenn das der Fall ist.

6. Verfahren nach Anspruch 5, wobei die bestimmte Fehlermarge zirka 20 kg beträgt.

7. Verfahren nach Anspruch 5, wobei die bestimmte Fehlermarge zwischen 7 und 15 kg liegt.

**8.** Verfahren nach einem der vorangehenden Ansprüche, wobei:

- auf mindestens einem Bild, das von dem Gesicht des Individuums erfasst wurde, das sich im Bereich der Zone präsentiert, biometrische Merkmale des Gesichts bestimmt werden,
- diese biometrischen Merkmale des Gesichts des Individuums mit biometrischen Merkmalen verglichen werden, die in einem Referenzdokument oder in einer Datenbank gespeichert sind,
- der Zugang in Abhängigkeit vom Ergebnis dieses Vergleichs gestattet wird oder nicht.

**9.** System zur Entdeckung von Betrug für die Zugangskontrolle durch Gesichtserkennung, das in einer Zone, wo die Zugangskontrolle für ein Individuum durchgeführt wird, das sich im Bereich der Zone präsentiert, aufweist:

- mindestens einen Gewichtssensor am Boden für die Messung des Gewichts des Individuums, das sich in der Zone präsentiert;
- mindestens eine Kamera für die Erfassung von mindestens einem Bild des Gesichts des Individuums, das sich im Bereich der Zone präsentiert;
- eine Recheneinheit, die für die Durchführung einer Schätzung des Gewichts des Individuums auf dem mindestens einen Bild geeignet ist, das von dem Gesicht eines Individuums erfasst wurde, das sich an der Zugangskontrolle präsentiert;
- wobei die Recheneinheit ferner für die Durchführung eines Vergleichs zwischen dem geschätzten Gewicht und dem gemessenen Gewicht und für die Auslösung oder nicht der Sendung eines Betrugsdetektionssignals in Abhängigkeit vom Ergebnis dieses Vergleichs geeignet ist.

**10.** System nach vorangehendem Anspruch, aufweisend:

- eine Verarbeitungseinheit, die für die Bestimmung auf dem mindestens einen erfassten Bild des Gesichts des Individuums, das sich im Bereich der Zone präsentiert, der biometrischen Merkmale des Gesichts des Individuums geeignet ist, wobei die Recheneinheit ferner für den Vergleich dieser biometrischen Merkmale des Gesichts des Individuums mit biometrischen Merkmalen geeignet ist, die in einem Referenzdokument oder in einer Datenbank gespeichert sind und den Zugang zu der vorbehaltenen Zone in Abhängigkeit vom Ergebnis dieses Vergleichs gestatten.

**Claims**

**1.** A fraud detection method for access control through facial recognition, wherein the following is implemented at an area where the access control is verified for an individual appearing at said area:

- a measurement of the weight of the individual, at least one weight sensor being provided on the ground for this purpose;
- an acquisition of at least one image of the face of the individual appearing at said area, by at least one camera provided for this purpose;
- an estimation of the weight of the individual by processing by a unit for computing the at least one acquired image of the face of the individual appearing to the access control;
- a comparison by said computation unit between the estimated weight and the measured weight;
and wherein said computation unit triggers or not the emission of a fraud detection signal depending on the result of this comparison.

**2.** The method according to claim 1, wherein the estimation of the weight of the individual implements an estimation of the body mass index of the person by processing of an image of the face by the computation unit.

**3.** The method according to claim 2, wherein the estimation of the weight of the individual implements an estimation of his height by processing of at least one image of the face by the computation unit.

**4.** The method according to claim 3, wherein the estimation of the height of the individual implements a determination of the height of his eyes.

**5.** The method according to any of the preceding claims, wherein, during the comparison by the computation unit between the estimated weight and the measured weight, said computation unit verifies whether the measured weight is greater than the estimated weight, at a given margin of error, and triggers a fraud detection signal when it is the case.

6. The method according to claim 5, wherein the given margin of error is on the order of 20 kg.

7. The method according to claim 5, wherein the given margin of error is comprised between 7 and 15 kg.

8. The method according to any of the preceding claims, wherein:

    - biometric characteristics of the face of the individual are determined on at least one acquired image of the face of the individual appearing at said area,
    - these biometric characteristics of the face of the individual are compared with biometric characteristics stored in a reference document or in a database,
    - the access is authorized or not depending on the result of this comparison.

9. A fraud detection system for access control through facial recognition, including, in an area where the access control is verified for an individual appearing at said area:

    - at least one ground weight sensor for measuring the weight of the individual appearing in said area;
    - at least one camera for acquiring at least one image of the face of the individual appearing at said area;
    - a computation unit adapted for the implementation of an estimation of the weight of the individual on at least one acquired image of the face of an individual appearing to the access control;
    - said computation unit being further adapted for the implementation of a comparison between the estimated weight and the measured weight and for the triggering or not of the emission of a fraud detection signal depending on the result of this comparison.

10. The system according to the preceding claim including:

    - a processing unit adapted to the determination, on the at least one acquired image of the face of the individual appearing at said area, of the biometric characteristics of the face of the individual, said computation unit being further adapted to the comparison of these biometric characteristics of the face of the individual with biometric characteristics stored in a reference document or in a database and authorizing or not the access to the reserved area depending on the result of this comparison.

FIG. 1

ACQUISITION
IMAGE VISAGE — 1

DETERMINATION
CARACTERISTIQUES
IMAGE VISAGE — 2

4

4a — DETERMINATION
IMC

DETERMINATION
HAUTEUR YEUX — 4b

P. ESTIMÉ

4c

COMPARAISON
RECONNAISSANCE
FACIALE — 3

OK

N OK

SI OK

P. MESURÉ → P. ESTIMÉ
≤
P. MESURÉ ±%

5

NON

* PORTE
BLOQUÉE
* DECLENCHEMENT
ALARME

6

OUI

OUVERTURE
PORTE — 7

FIG. 2

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2871602

- CN 101246608

**Littérature non-brevet citée dans la description**

- **WEN, L. ; GUO, G.** *A Computational Approach To Body Mass Index Prediction From Face Images, Image and Vision Computing,* 2013, vol. 31 (5), 392-400